# EUROPÄISCHE PATENTANMELDUNG

(11) **EP 1 760 226 A2**
(43) Veröffentlichungstag der Anmeldung: **07.03.2007**
(21) Anmeldenummer: 06018092.4
(22) Anmeldetag: 30.08.2006
(51) Int. Cl.: E04H 17/14, A01G 1/08

(54) **Palisadenband**

(30) Priorität: 31.08.2005 DE 202005013812 U
(71) Anmelder: Bernhard Brinkmann System Beton oHG BSB, 45721 Haltern (DE)
(72) Erfinder: Brinkmann, Bernhard, 45721 Haltern (DE); Brinkmann, Marc, 45721 Haltern (DE); Brinkmann, Wilhelm, 45721 Haltern (DE)
(74) Vertreter: Nunnenkamp, Jörg

(57) **Zusammenfassung**

Die Erfindung betrifft ein Palisadenband mit einer Mehrzahl an Palisaden, die unter Bildung von Gelenkgliedem mittels Verbindungsmitteln aneinander angeschlossen sind. Die Verbindungsmittel sind von einer biegeelastischen oder flexiblen Bandverbindung gebildet, deren Bandlänge im Wesentlichen der Länge des Palisadenbandes und deren Bandbreite der Höhe oder nahezu der Höhe der Palisaden entspricht.

## Beschreibung

Die Erfindung betrifft ein Palisadenband mit einer Mehrzahl an Palisaden, die unter Bildung von Gelenkgliedern mittels Verbiridungsmitteln aneinander angeschlossen sind.

Es sind derartige Palisadenbänder für beispielsweise Beetumrandungen oder dergleichen aus der Praxis bekannt, bei welchen die im Allgemeinen aus Holz bestehenden Palisaden dicht bei dicht nebeneinander angeordnet und rückseitig mittels ein oder regelmäßig zwei distanzierten Drähten aneinander angeschlossen sind. Dazu sind diese Drähte mittels Klammern auf den Palisadenrückseiten befestigt. Problematisch bei derartigen Palisadenbändern ist die Tatsache, dass die ursprünglich ausgerichteten Palisaden ihre ausgerichtete Stellung nicht beibehalten, sondern aufgrund der flexiblen Drahtverbindung zu unterschiedlichen Schrägstellungen neigen. Das gilt insbesondere nach ihrem Einbau mit teilweise in das Erdreich eingesetzten Palisadenenden, die dazu regelmäßig angespitzt sind. Eine derartige Schrägstellung ist einerseits in ästhetischer Hinsicht unbefriedigend, ermöglicht andererseits ein teilweises Austreten von Erdreich. Hier will die Erfindung Abhilfe schaffen.

Der Erfindung liegt die Aufgabe zugrunde, ein Palisadenband der eingangs beschriebenen Ausführungsform zu schaffen, bei dem die ausgerichteten Palisaden ihre ausgerichtete Stellung stets beibehalten und folglich in funktioneller und ästhetischer Hinsicht hohen Ansprüchen genügen.

Diese Aufgabe löst die Erfindung bei einem gattungsgemäßen Palisadenband dadurch, dass die Verbindungsmittel von einer biegeelastischen oder flexiblen Bandverbindung gebildet sind, deren Bandlänge im Wesentlichen der Länge des Palisadenbandes und deren Bandbreite der Höhe oder nahezu der Höhe der Palisaden entspricht. Im Allgemeinen verfügen die Palisaden über eine Länge respektive Höhe von mehreren zehn Zentimetern, können beispielsweise zwanzig bis dreißig Zentimeter lang sein. Selbstverständlich sind auch hiervon abweichende Längen möglich und werden von der Erfindung umfasst.

Diese Maßnahmen der Erfindung haben zur Folge, dass die Palisaden durch die sie im Wesentlichen rückseitig nahezu vollständig überdeckende Bandverbindung ihre stets ausgerichtete Stellung zueinander beibehalten. Das gilt nicht nur für die Lagerung und den Transport, sondern auch für den Einbau und die Positionierung nach erfolgtem Einbau. Tatsächlich ist aufgrund der Bandverbindung gewährleistet, dass ein selbstständiges und beliebiges Schrägstellen der einzelnen Palisaden ausgeschlossen ist. Folglich zeichnet sich das erfindungsgemäße Palisadenband durch eine funktionsgerechte und auch in ästhetischer Hinsicht voll befriedigende Ausführungsform aus. Das gilt nicht nur für Ausführungsformen aus Holz oder Kunststoff, sondern nach einer bevorzugten Ausführungsform der Erfindung ist vorgesehen, dass die Palisaden aus einem (zunächst flüssigen und dann aushärtenden) Baustoff wie zum Beispiel Beton bestehen und die die Palisaden gelenkig verbindende Bandverbindung als Bewehrung in den Beton oder dergleichen Baustoff integriert ist. Danach übernimmt die Bandverbindung nicht nur Stabilitätsfunktion in Bezug auf die Ausrichtung der einzelnen Palisaden, sondern auch noch Bewehrungsfunktion, wenn diese Palisaden aus einem Baustoff und insbesondere Beton bestehen.

Erfindungsgemäß kann die Bandverbindung als Gewebe- oder Gewirkeband ausgebildet sein. Aber auch die Ausbildung als Vliesband oder dünnes Metallband oder auch Kunststoffband ist denkbar. Dabei kann die Bandverbindung sowohl durchgängig geschlossen als auch mit Durchbrechungen ausgerüstet werden. Sofern Durchbrechungen vorgesehen sind, sind die Bandverbindungen als gelochte oder geschlitzte Bänder ausgeführt. Es ist sogar denkbar, die Bandverbindung und die jeweilige Palisade aus ein und demselben Werkstoff herzustellen, beispielsweise aus Kunststoff. Dann ist die Bandverbindung als Kunststoffband ausgeführt, an dem die ebenfalls aus Kunststoff hergestellten Palisaden befestigt sind und miteinander verbunden werden. Nach einer bevorzugten Ausführungsform der Erfindung ist die Bandverbindung als Netzband ausgebildet, dessen Netzlänge im Wesentlichen der Länge des Palisadenbandes und dessen Netzbreite der Höhe oder nahezu der Höhe des Palisadenbandes entspricht. - Weiter lehrt die Erfindung ein Palisadenband, welches durch einen wandartigen Palisadenstrang aus Beton der dergleichen Baustoff mit einer eingegossenen Bandverbindung gekennzeichnet ist, wobei zwischen den Palisaden von der Bandverbindung überbrückte Sollbruchstellen angeordnet sind. Dadurch besteht die Möglichkeit, den wandartigen Palisadenstrang im Zuge des Einbaus in beliebig lange Wandabschnitte zu unterteilen.

Darüber hinaus stellen die Sollbruchstellen in Verbindung mit sie jeweils umschließenden bzw. einschließenden Hohlkehlen sicher, dass das Palisadenband auch bogenförmig verlegt bzw. in einen Untergrund eingebracht werden kann. Tatsächlich findet sich die jeweilige Sollbruchstelle am Grunde dieser meist V-förmigen Hohlkehlen, so dass hierdurch die nötige Winkelbeweglichkeit der einzelnen Palisaden zueinander gegeben ist und sich im Ergebnis praktisch beliebige Linienformen mit dem Palisadenband - auch wellenartig - realisieren lassen.

In diesem Zusammenhang lässt sich auch ein völlig gelenkiger Palisadenverband verwirklichen, wenn sämtliche Sollbruchstellen gebrochen werden und jeder Sollbruchstelle eine Hohlkehle zugeordnet ist. Denn dann lassen sich die einzelnen Palisaden nur noch über die Bandverbindung um ihre dicht bei dicht aneinander angrenzenden Längskanten ohne Schrägstellung zueinander abwinkeln und stehen miteinander in Verbindung. - Nach einer abgewandelten AusfUhrungsform der Erfindung kann die Bandverbindung mit den Palisaden auch adhäsiv verbunden, zum Beispiel verklebt sein.

Die Palisaden können an ihrem einen Ende eine Eintreibspitze und/oder an ihrem anderen Ende ein Kopfdekor aufweisen. Sie können einen halbrunden, vollrunden oder mehreckigen Querschnitt besitzen und eine mit Ornamenten versehene Oberfläche, zum Beispiel dem Betrachter zugeordnete Sichtfläche aufweisen. Solche Querschnitte und Ornamente lassen sich unschwer auch bei aus Beton gegossenen Palisaden durch eine entsprechende Gestaltung der Formwerkzeuge bzw. Gießformen verwirklichen. Das gilt ebenso für die Sollbruchstellen. - Im Falle der Ausführungsform eines Netzbandes als Bandverbindung lässt sich ein Draht- oder Kunststoffnetz verwirklichen. Vorzugsweise ist das Netzband als hinreichend engmaschiges Netz und gegebenenfalls auch als mehrlagiges Netz ausgebildet, so dass eine besonders innige Verbindung mit beispielsweise Beton oder dergleichen Baustoff erreicht wird. Selbstverständlich kann auch eine geschlossene Bandverbindung zum Einsatz kommen, die als Kunststoffband ausgeführt ist und mit welcher Palisaden aus Holz, Kunststoff und so weiter untereinander zu dem Palisadenband gekoppelt werden. Als weitere Baustoffe können natürlich nicht nur Beton, Zement, Mörtel etc., sondern auch Natursteine wie Granit, aber auch Glas, Stahl, Bitumen und selbstverständlich Kombinationen zum Einsatz kommen.

Im Folgenden wird die Erfindung anhand einer lediglich ein Ausführungsbeispiel darstellenden Zeichnung näher erläutert. Es zeigen:
- Fig. 1: ausschnittsweise ein Palisadenband aus Beton in Frontansicht,
- Fig. 2: den Gegenstand nach Fig. 1 in Ansicht auf die Rückseite,
- Fig. 3: einen teilweisen Horizontalschnitt durch den Gegenstand nach Fig. 1,
- Fig. 4: ausschnittsweise ein mehrschichtiges Netzband zur Herstellung des Gegenstandes nach Fig. 1,
- Fig. 5: ein abgewandeltes Netzband der Fig. 4,
- Fig. 6: eine Vorrichtung zur Herstellung des beschriebenen Palisadenbandes komplett und
- Fig. 7 und 8: Einzelteile der Vorrichtung nach Fig. 6.

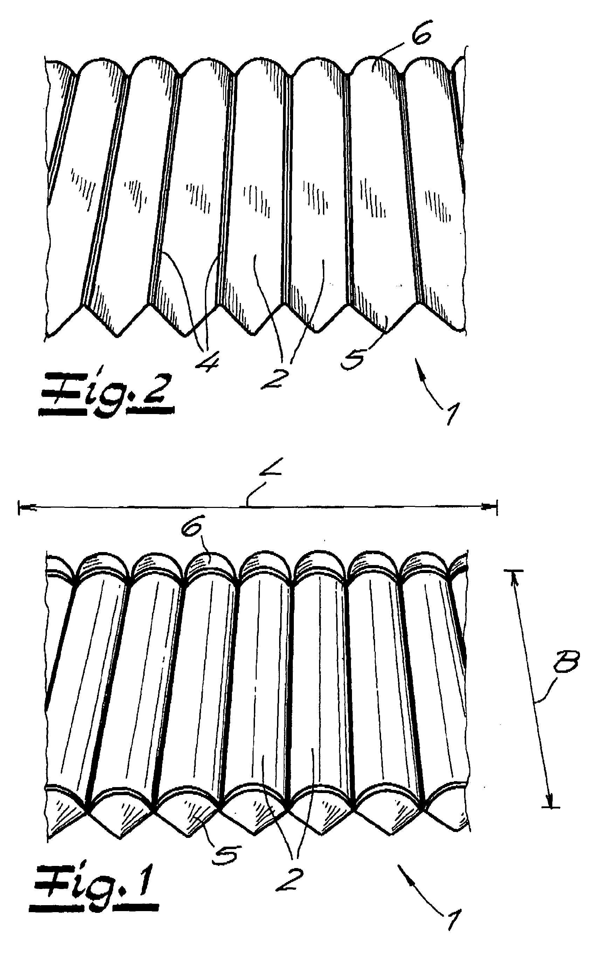

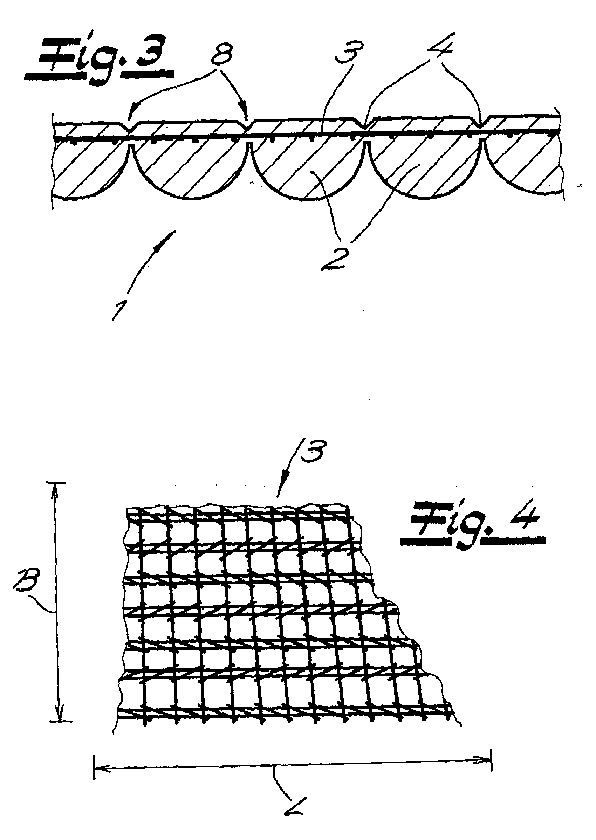

In den Fig. 1 bis 4 ist ausschnittsweise ein Palisadenband 1 mit einer Mehrzahl von Palisaden 2 dargestellt, die unter Bildung von Gelenkgliedern mittels Verbindungsmitteln aneinander angeschlossen sind. Die Verbindungsmittel sind vorliegend von einem Netzband 3 als biegeelastische oder flexible Bandverbindung 3 gebildet. Die Netzlänge L des Netzbandes 3 entspricht im Wesentlichen der Länge des Palisadenbandes 1, während dessen Netzbreite B der Höhe oder nahezu der Höhe des Palisadenbandes 1 entspricht. Tatsächlich erstreckt sich das Netzband 3 im Rahmen des Ausführungsbeispiels und nicht einschränkend bis etwa zur Längsmitte der jeweils endseitig des Palisadenbandes 1 vorgesehenen Palisade 2. Sofern es sich bei den Palisaden 2 um Holzpalisaden handelt, kann das Netzband 3 mittels Klammern auf der Rückseite der Palisaden 2 befestigt werden. Im Falle von Kunststoffpalisaden lässt sich ebenso wie bei Baustoffpalisaden eine Adhäsiv-Verbindung verwirklichen.

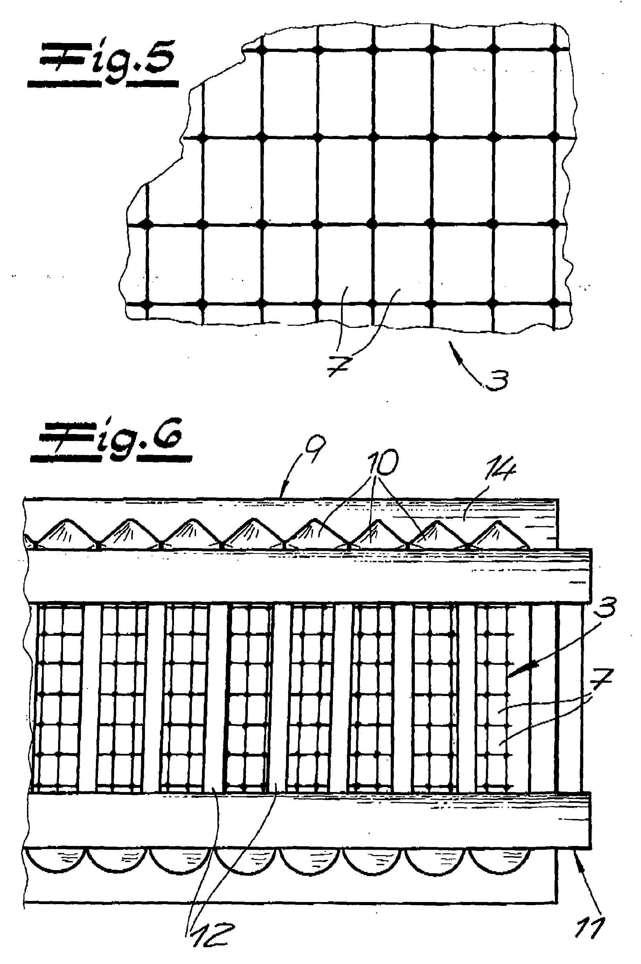

Anhand der Fig. 4 und 5 erkennt man, dass das Netzband 3 im Ausführungsbeispiel aus einem mehrlagigen Kunststoffnetz nach Fig. 4 bestehen kann, wobei aber auch ein Drahtnetz möglich ist. Daneben empfiehlt sich eine Ausgestaltung des Netzes, wie sie in Fig. 5 gezeigt ist, wobei jeweils nahezu rechteckige Maschen 7 realisiert sind, die eine Fläche von einigen Quadratzentimetern einnehmen können, beispielsweise ein Quadratzentimeter bis fünf Quadratzentimeter groß sind. Demzufolge ist das Netzband 3 in sämtlichen Fällen als hinreichend engmaschiges Netz ausgebildet. Als Kunststoff für die Herstellung des Netzbandes 3 empfiehlt die Erfindung beispielhaft und nicht einschränkend Polypropylen.

Die vorerwähnte Werkstoffwahl und Maschengröße, die insgesamt zu einem engmaschigen Netz führt, stellt sicher, dass die Palisaden 2 nach besonders bevorzugter Ausführungsform auch aus Beton hergestellt werden können, wobei das die Palisaden 2 gelenkig verbindende Netzband 3 ergänzend als Bewehrung in den Beton integriert ist. Denn in Folge der erläuterten Größe der Maschen 7 von einigen Quadratzentimetern ist der Beton (oder ein vergleichbarer, zunächst flüssiger und dann aushärtender Baustoff) in der Lage, das jeweils im Innern der Palisaden 2 befindliche Netzband 3 (meistens ist dieses in etwa mittig positioniert) einwandfrei durchdringen zu können, so dass Betonabplatzungen nicht auftreten. Im Übrigen hat sich Polypropylen als Werkstoff für das Netzband 3 als günstig erwiesen, weil dieses unbeschadet in die alkalische Umgebung bei der Betonherstellung eingebracht werden kann.

Im Einzelnen lässt sich ein wandartiger Palisadenstrang bzw. ein Palisadenband 1 aus Beton mit einem jeweils eingegossenen Netzband 3 verwirklichen, wobei zwischen den jeweiligen Palisaden 2 von dem Netzband 3 überbrückte Sollbruchstellen 4 angeordnet sind. Die Sollbruchstellen 4 werden jeweils von V-Hohlkehlen 8 flankiert. Am Grunde der jeweiligen Hohlkehle 8 ist die Sollbruchstelle 4 vorgesehen. Hohlkehle 8 und Sollbruchstelle 4 verlaufen nahezu parallel zueinander und in Längsrichtung zwischen den einzelnen Palisaden 2. Auf diese Weise können die einzelnen Palisaden 2 durch Brechen der jeweiligen Sollbruchstelle 4 gelenkig gegenüber der jeweils benachbarten Palisade 2 abgewinkelt werden und lassen sich praktisch beliebig gestaltete Palisadenwände bzw. Palisadenbänder 1 - auch wellenförmig - realisieren.

Die Palisaden 2 weisen an ihrem einen Ende eine Eintreibspitze 5 und an ihrem anderen Ende ein Kopfdekor 6 - bei halbrundern Querschnitt einen halbkugelförmigen Kopf - auf. Neben Palisaden 2 mit einem halbrunden Querschnitt lassen sich aber auch Palisaden 2 mit einem vollrunden oder mehreckigen und im Übrigen beliebigen Querschnitt verwirklichen. Besonders bewährt hat sich eine Form und Oberflächengestaltung der Palisaden 2, die derjenigen von Palisaden aus Holz entspricht; folglich an ihrer Oberfläche eine Holz- oder Rindennachbildung mit entsprechender Maserung aufweist. Das ist selbstverständlich nicht zwingend.

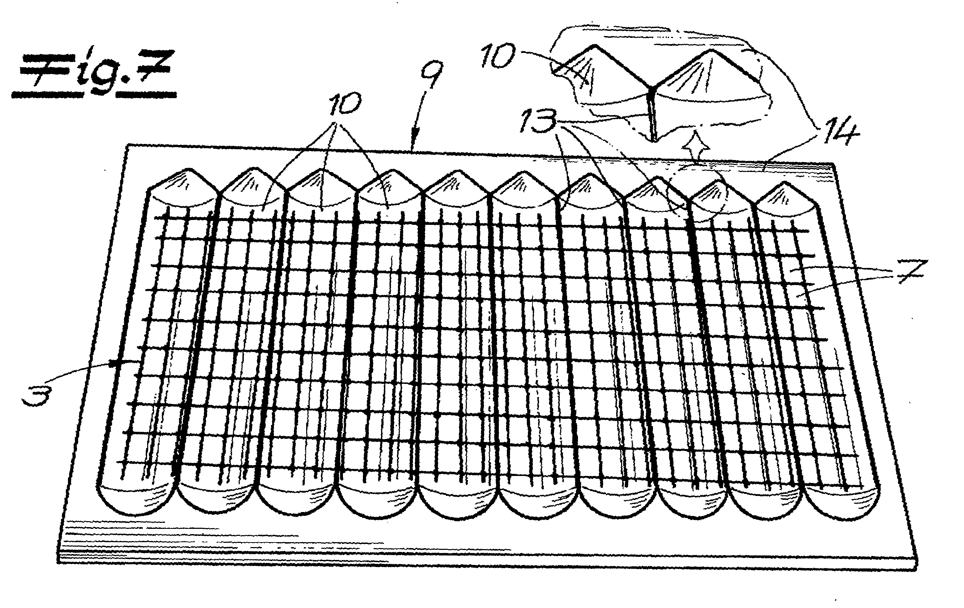

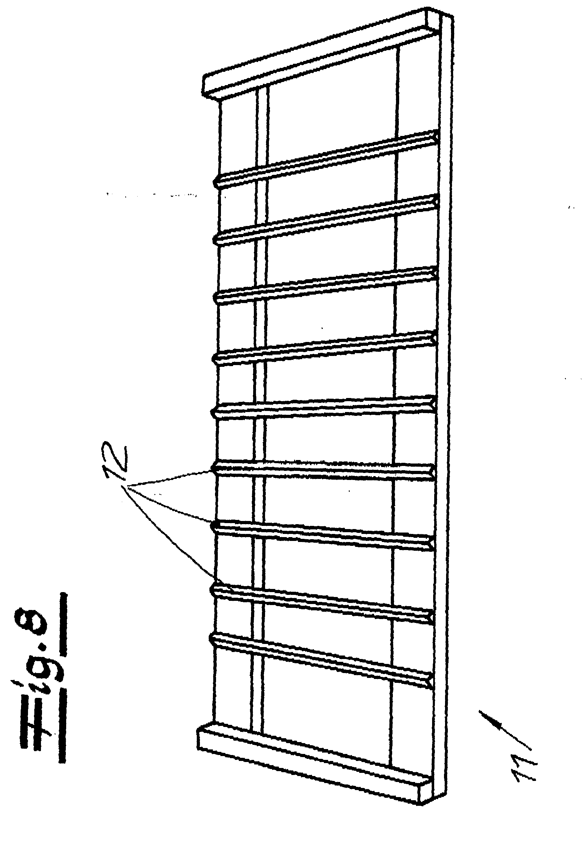

Zur Herstellung der beschriebenen Palisaden 2 bzw. des Palisadenbandes 1 im Ganzen wird eine Vorrichtung eingesetzt, wie sie in den Fig. 6 bis 8 dargestellt ist. In der Fig. 6 erkennt man die Vorrichtung in zusammengebautem Zustand mit ihren sämtlichen Einzelteilen. Tatsächlich setzt sich die Vorrichtung im Wesentlichen aus einer Gießform 9 mit mehreren Formnestem 10 für jeweils eine Palisade 2 sowie aus dem Netzband 3 zusammen. Die Gießform 9 wird aus einem Gummi bzw. einem gummielastischem Werkstoff hergestellt, um nach Fertigstellung das Palisadenband 1 problemlos entnehmen zu können. Zu diesem Zweck wird ergänzend ein Trennmittel in die Formnester 10 eingebracht, bevor der flüssige Baustoff in die Formnester 10 - im vorliegenden Fall Beton - eingefüllt wird. Das heißt, die Gießform 9 nimmt gleichzeitig das Netzband 3 bzw. die biegeelastische oder flexible Bandverbindung 3 sowie den flüssigen und aushärtenden Baustoff auf.

Neben dem engmaschigen Netz bzw. Netzband 3 entsprechend der Variante nach Fig. 5 gehört zu der Vorrichtung noch ein Abschlussgitter 11, welches im Detail in der Fig. 8 dargestellt ist und mit die Sollbruchstellen 4 sowie die jeweiligen Hohlkehlen 8 vorgebenden V-förmigen Stegen 12 ausgerüstet ist. Die Vorgehensweise bei der Herstellung des Palisadenbandes 1 ist wie folgt:

Zunächst wird die Form bzw. aus Gummi bestehende Form 9 bis zur Höhe jeweiliger Auflagestege 13 mit dem flüssigen Baustoff, vorliegend Beton, gefüllt. Danach wird das engmaschige Netz bzw. Netzband 3 in die Form 9 eingelegt, und zwar auf den Auflagestegen 13 platziert. Anschließend wird wiederum der flüssige Baustoff bzw. Beton eingefüllt und überdeckt nun das engmaschige Netz 3. Der Baustoff wird so lange eingefüllt, bis seine Oberfläche eine Oberkante 14 der Gießform 9 erreicht hat. Jetzt wird die Gitterabdeckung 11 nach Fig. 8 mit den V-förmigen Stegen 12 in Richtung auf die Auflagestege 13 in die Gießform 9 eingelegt, wie dies in der Fig. 6 dargestellt ist. Dabei sind die jeweiligen Auflagestege 13 und die V-förmigen Stege 12 jeweils aufeinanderliegend angeordnet, so dass sich hierdurch automatisch die Sollbruchstellen 4 und die jeweiligen Hohlkehlen 8 wie skizziert beim Aushärten des Baustoffes bilden.

## Patentansprüche

1. Palisadenband (1) mit einer Mehrzahl an Palisaden (2), die unter Bildung von Gelenkgliedern mittels Verbindungsmitteln aneinander angeschlossen sind, **dadurch gekennzeichnet, dass** die Verbindungsmittel von einer biegeelastischen oder flexiblen Bandverbindung (3) gebildet sind, deren Bandlänge (L) im Wesentlichen der Länge des Palisadenbandes (1) und deren Bandbreite (B) der Höhe oder nahezu der Höhe der Palisaden (2) entspricht.

2. Palisadenband (1) nach Anspruch 1, **dadurch gekennzeichnet, dass** die Bandverbindung (3) als Gewebe- und/oder Gewirkeband und/oder als Vliesband und/oder als Metallband und/oder als Kunststoffband ausgebildet ist.

3. Palisadenband (1) nach Anspruch 1 oder 2, **dadurch gekennzeichnet dass** die Bandverbindung (3) Durchbrechungen aufweist, zum Beispiel als gelochtes oder geschlitztes Band ausgebildet ist.

4. Palisadenband (1) nach einem der Ansprüche 1 bis 3, **dadurch gekennzeichnet, dass** die Bandverbindung (3) als Netzband ausgebildet ist.

5. Palisadenband (1) nach einem der Ansprüche 1 bis 4, **dadurch gekennzeichnet, dass** die Bandverbindung (3) mit den Palisaden adhäsiv verbunden, zum Beispiel verklebt ist.

6. Palisadenband (1) nach einem der Ansprüche 1 bis 5, **dadurch gekennzeichnet, dass** die Palisaden (2) aus einem Baustoff, zum Beispiel Beton bestehen und die die Palisaden (2) gelenkig verbindende Bandverbindung (3) als Bewehrung in den Beton oder dergleichen Baustoff integriert ist.

7. Palisadenband (1) nach einem der Ansprüche 1 bis 6, **gekennzeichnet durch** einen wandartigen Palisadenstrang aus Beton oder dergleichen Baustoff mit einer eingegossenen Bandverbindung (3), wobei zwischen den Palisaden (2) von der Bandverbindung (3) überbrückte Sollbruchstellen (4) angeordnet sind.

8. Palisadenband (1) nach einem der Ansprüche 1 bis 7, **dadurch gekennzeichnet, dass** die Palisaden (2) an ihrem einen Ende eine Eintreibspitze (5) und/oder an ihrem anderen Ende ein Kopfdekor (6) aufweisen.

9. Palisadenband (1) nach einem der Ansprüche 1 bis 8, **dadurch gekennzeichnet, dass** die Palisaden (2) einen halbrunden, vollrunden oder mehreckigen Querschnitt aufweisen.

10. Vorrichtung zur Herstellung eines Palisadenbandes (1) mit einer Mehrzahl an Palisaden (2), die unter Bildung von Gelenkgliedern mittels Verbindungsmitteln aneinander angeschlossen sind, **gekennzeichnet durch** eine Gießform (9) zur gleichzeitigen Aufnahme einer biegeelastischen oder flexiblen Bandverbindung (3) sowie eines flüssigen und aushärtenden Baustoffes.
